# EUROPÄISCHE PATENTSCHRIFT

(11) **EP 1 831 062 B1**
(45) Veröffentlichungstag und Bekanntmachung des Hinweises auf die Patenterteilung: **16.12.2009**
(21) Anmeldenummer: 05799396.6
(22) Anmeldetag: 29.10.2005
(51) Int. Cl.: B60T 17/02

(54) **DRUCKMITTELANLAGE**
PRESSURISED MEDIUM SYSTEM
INSTALLATION A AGENT DE PRESSION

(30) Priorität: 22.12.2004 DE 102004061761
(43) Veröffentlichungstag der Anmeldung: 12.09.2007
(73) Patentinhaber: WABCO GmbH, 30453 Hannover (DE)
(72) Erfinder: DIEKMEYER, Heinrich, 30890 Barsinghausen (DE)
(74) Vertreter: Günther, Constantin
(86) Internationale Anmeldenummer: PCT/EP2005/011616
(87) Internationale Veröffentlichungsnummer: WO 2006/074722

(56) Entgegenhaltungen:
- EP-A- 1 464 556
- DE-A1- 10 258 889
- DE-C2- 10 004 091
- US-A1- 2004 141 853

## Beschreibung

Die Erfindung betrifft eine Druckmittelanlage gemäß dem Oberbegriff des Patentanspruchs 1.

Bekannte Druckmittelanlagen in der Fahrzeug-Technik weisen üblicherweise eine Druckmittel-Versorgungseinrichtung, Druckmittel-Vorratsbehälter sowie Druckmittel-Verbraucher auf, letztere beispielsweise in Form von Betriebsbremsanlagen, Anhängerbremsanlagen, Feststellbremsanlagen oder Luftfederungsanlagen. Solche Druckmittel-Verbraucher entnehmen das benötigte Druckmittel aus einem oder häufig auch aus mehreren Druckmittel-Vorratsbehältern. Zur Auffüllung der Druckmittel-Vorratsbehälter mit dem Druckmittel ist die Druckmittel-Versorgungseinrichtung vorgesehen. Die Druckmittel-Versorgungseinrichtung weist z. B. bei Verwendung von Druckluft als Druckmittel in bekannter Weise einen Kompressor, einen Lufttrockner, einen Druckregler sowie zur Trennung einzelner Druckluftkreise ein Mehrkreisschutzventil auf. Eine derartige Druckluft-Versorgungseinrichtung kann auch, wie z. B. aus der EP 1 464 556 A1 oder der DE 100 04 091 C2 bekannt, mit einer elektronischen Steuerung versehen sein. Die elektronische Steuerung übernimmt dann die Funktionen des Druckreglers und des Mehrkreisschutzventils konventioneller Bauart in Verbindung mit geeigneten Sensoren und Aktuatoren, d.h. die elektronische Steuerung enthält dann eine Mehrkreisschutz-Funktion.

Bei Verwendung der zuvor erwähnten Druckmittel-Verbraucher in einem Fahrzeug ist zu beachten, dass solche Druckmittel-Verbraucher, deren Verfügbarkeit nicht oder nur geringfügig mit sicherheitskritischen Auswirkungen auf den Betrieb des Fahrzeuges verbunden ist, aus Sicherheitsgründen nicht, etwa infolge großen Druckmittel-Verbrauchs, die Funktion solcher Druckmittel-Verbraucher beeinträchtigen sollten, deren Verfügbarkeit mit besonders sicherheitskritischen Auswirkungen auf den Betrieb des Fahrzeuges verbunden ist. Als Beispiele seien für einen Druckmittel-Verbraucher mit besonders sicherheitskritischen Auswirkungen bei eingeschränkter Verfügbarkeit die Bremsanlage eines Fahrzeuges genannt, und für einen Druckmittel-Verbraucher mit geringfügig sicherheitskritischen Auswirkungen eine Luftfederungsanlage.

Im Falle von Fahrzeugen mit Druckluft-Bremsanlage ist diesem Zusammenhang insbesondere die Richtlinie 98/12/EG zu beachten. Insbesondere um den Absatz 2.2.1.16 des Anhangs I der zuvor genannten Richtlinie (entspricht der Regelung ECE-R13, Absatz 5.2.1.16) zu erfüllen, ist es bekannt, für bestimmte Gruppen von Druckluft-Verbrauchern jeweils einen eigenen Druckluft-Vorratsbehälter vorzusehen. So wird üblicherweise z. B. für die Betriebsbremsanlage ein Druckluft-Vorratsbehälter für den Vorderachs-Bremskreis und ein gesonderter Druckluft-Vorratsbehälter für den Hinterachs-Bremskreis eingesetzt. Zusätzlich wird für andere Druckluft-Verbraucher, wie etwa die erwähnte Luftfederungsanlage, jeweils ein separater Druckluft-Vorratsbehälter vorgesehen. Hierdurch soll sichergestellt werden, dass die in der Richtlinie 98/12/EG erwähnten Nebenverbraucher, d. h. solche Verbraucher, die nicht zur Betriebsbremsanlage des Fahrzeugs gehören, wie die Luftfederungsanlage, nicht in unerwünschter Weise durch ihren Betrieb den Druckluft-Vorrat in den Druckluft-Vorratsbehältern der Betriebsbremsanlage derart stark reduzieren, dass die gesetzlich vorgeschriebene Bremsbarkeit des Fahrzeuges in Frage gestellt ist. Die bekannte Vorgehensweise, gesonderte Überströmventile und Druckluft-Vorratsbehälter für eine Vielzahl von Druckluftkreisen vorzusehen, ist mit hohen Kosten und einem hohen Aufwand bei der Installation der Druckluftanlage in einem Fahrzeug verbunden.

Der Erfindung liegt daher die Aufgabe zugrunde, eine Druckmittelanlage anzugeben, die weniger aufwendig und teuer gestaltet werden kann.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, dass bei der erfindungsgemäßen Druckmittelanlage auf gesonderte Überströmventile und Druckmittel-Vorratsbehälter für solche Druckmittel-Verbrauchseinrichtungen, die Nebenverbraucher im zuvor erläuterten Sinne sind, verzichtet werden kann. Die Druckmittel-Verbrauchseinrichtung kann dabei in vorteilhaft einfacher Weise entweder direkt oder auch über die Druckmittel-Versorgungseinrichtung an andere Druckmittel-Vorratsbehälter zur Versorgung mit dem Druckmittel angeschlossen werden, die beispielsweise zur Erfüllung der Richtlinie 98/12/EG ohnehin vorhanden sein müssen, zum Beispiel die Druckmittel-Vorratsbehälter der Betriebsbremsanlage. Hierdurch können die Kosten für die entfallenden Überströmventile und den Druckmittel-Vorratsbehälter sowie für entsprechende, für deren Anschluss erforderliche Druckmittelleitungen eingespart werden. Außerdem können Kosten und Zeit bei der Installation der Druckmittelanlage eingespart werden. Ein weiterer Vorteil besteht darin, dass damit die Bestimmungen der Richtlinie 98/12/EG erfüllt werden. Hierbei sorgt das Zusammenspiel zwischen derjenigen Einrichtung in der Druckmittelanlage, welche das Druckmittelentnahme-Freigabesignal erzeugt, und der Druckmittel-Verbrauchseinrichtung, welche das Druckmittelentnahme-Freigabesignal entsprechend beachtet, für die Einhaltung dieser Bestimmungen, ohne dass beim Entwurf der Druckmittelanlage des Fahrzeuges weitere Maßnahmen berücksichtigt werden müssen.

Die Erfindung wird nachfolgend anhand eines Ausführungsbeispiels unter Nennung weiterer Vorteile sowie unter Verwendung von Zeichnungen näher erläutert.

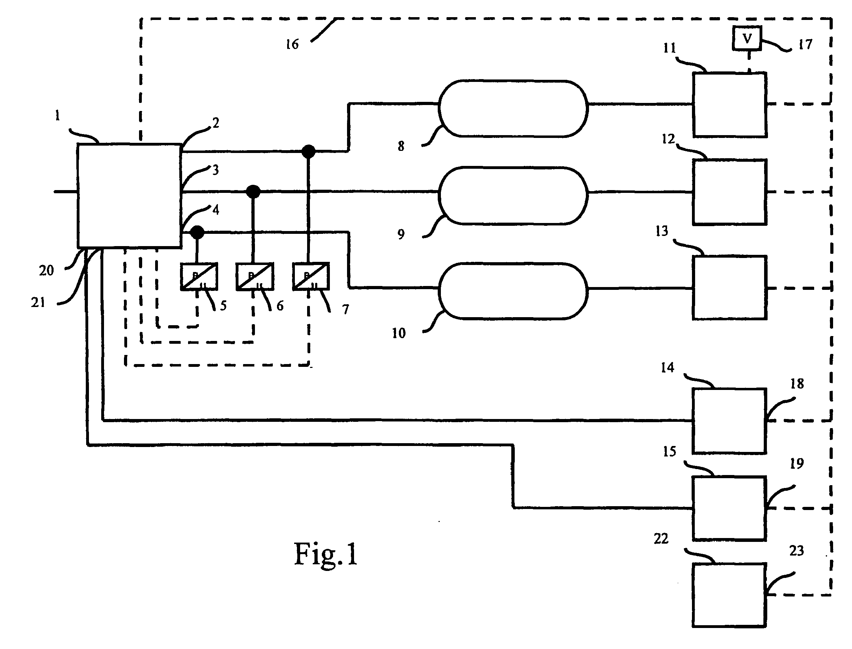

Die Fig. 1 bis 3 zeigen Ausführungsformen einer Druckmittelanlage in schematischer Darstellung. In den Figuren sind Druckmittelleitungen mit durchgezogenen Linien und elektrische Leitungen mit gestrichelten Linien dargestellt. Es sei nachfolgend angenommen, dass die Druckmittelanlage gemäß den Figuren in einem Fahrzeug zum Einsatz kommt.

Gemäß Fig. 1 weist eine Druckmittel-Versorgungseinrichtung (1) Druckmittelabgabeanschlüsse (2, 3, 4) auf, die über Druckmittelleitungen mit Druckmittel-Vorratsbehältern (8, 9, 10) verbunden sind. Mit den Druckmittel-Vorratsbehältern (8, 9, 10) sind druckmittelverbrauchende Einrichtungen (11, 12, 13) über Druckmittelleitungen verbunden. Bei den druckmittelverbrauchenden Einrichtungen (11, 12, 13) handelt es sich beispielsweise um den Betriebsbremskreis (11) der Vorderachse, den Betriebsbremskreis (12) der Hinterachse sowie einen Bremskreis (13) für einen Anhänger. Die druckmittelverbrauchenden Einrichtungen (11, 12, 13) können jederzeit aus dem ihnen zugeordneten Druckmittel-Vorratsbehälter (8, 9, 10) Druckmittel entnehmen.

Die Druckmittel-Versorgungseinrichtung (1) weist eine Mehrkreisschutz-Funktion auf, die zur Entkopplung der zuvor erwähnten Druckmittelkreise dient und die Funktion eines bekannten Mehrkreisschutzventils erfüllt. Eine derartige Mehrkreisschutz-Funktion sowie eine konkrete Ausgestaltung mit Pneumatik-Ventilen ist z. B. aus der DE 196 22 095 A1 bekannt.

Die Druckmittel-Versorgungseinrichtung (1) weist weitere Druckmittelabgabeanschlüsse (20, 21) auf, an die eine erste Druckmittel-Verbrauchseinrichtung (14) und eine zweite Druckmittel-Verbrauchseinrichtung (15) jeweils über Druckmittelleitungen angeschlossen sind. Die erste Druckmittel-Verbrauchseinrichtung (14) und die zweite Druckmittel-Verbrauchseinrichtung (15) sind über die Mehrkreisschutz-Funktion mit den Druckmittel-Vorratsbehältern (8, 9) verbindbar. Die Druckmittel-Verbrauchseinrichtung (14) oder (15) kann z.B. als eine Niveauregelungsanlage für ein Kraftfahrzeug ausgebildet sein.

Des weiteren ist ein Datenkommunikations-Kanal (16) vorgesehen, der vorteilhaft als drahtgebundener Datenbus, z. B. als CAN-Bus (CAN = Controller Area Network), bei dem die Datenkommunikation über elektrische Leitungen erfolgt, ausgestaltet sein kann. Es ist ebenfalls vorteilhaft, den Datenkommunikations-Kanal (16) als drahtlose Datenübertragungsstrecke auszugestalten, z. B. mit einer Funkübertragung. Die Druckmittel-Versorgungseinrichtung (1) sowie zumindest die Druckmittel-Verbrauchseinrichtungen (14, 15) sind jeweils über einen Anschluss (18, 19) mit dem Datenkommunikations-Kanal (16) verbunden. In einer vorteilhaften Ausgestaltung der Erfindung sind außerdem die druckmittelverbrauchenden Einrichtungen (11, 12, 13) über jeweilige Anschlüsse mit dem Datenkommunikations-Kanal (16) verbunden.

In einer vorteilhaften Ausgestaltung der Erfindung können weitere Einrichtungen (22) über jeweilige Anschlüsse (23) mit dem Datenkommunikations-Kanal (16) verbunden sein, z. B. eine Zentral-Elektronik oder eine Instrumententafel-Elektronik.

Über den Datenkommunikations-Kanal (16) können die Einrichtungen (1, 11, 12, 13, 14, 15, 22) Daten miteinander austauschen.

Die Druckmittel-Versorgungseinrichtung (1) ist über elektrische Leitungen mit Drucksensoren (5, 6, 7) verbunden, die jeweils pneumatisch mit den Druckmittel-Vorratsbehältern (8, 9, 10) verbunden sind und den jeweiligen Druck in den Druckmittel-Vorratsbehältern (8, 9, 10) sensieren und als Drucksignal an die Druckmittel-Versorgungseinrichtung (1) abgeben. Die Drucksensoren (5, 6, 7) können auch in die Druckmittel-Versorgungseinrichtung (1) integriert sein. Die Druckmittel-Versorgungseinrichtung (1) überträgt die Drucksignale der Drucksensoren (5, 6, 7) über den Datenkommunikations-Kanal (16).

Des weiteren erzeugt die Druckmittel-Versorgungseinrichtung (1) ein Druckmittelentnahme-Freigabesignal (kurz: Freigabesignal), welches einer Druckmittel-Verbrauchseinrichtung (14, 15) signalisiert, dass Druckmittel aus wenigstens einem Druckmittel-Vorratsbehälter (8, 9, 10) entnommen werden darf. Hierfür vergleicht die Druckmittel-Versorgungseinrichtung (1) das Drucksignal des dem jeweiligen Druckmittel-Vorratsbehälter (8, 9, 10) zugeordneten Drucksensors (5, 6, 7) mit einem für den Druckmittel-Vorratsbehälter vorgegebenen Mindestwert und erzeugt das Freigabesignal, wenn das Drucksignal einen vorgegebenen Mindestwert erreicht. Bei einer Unterschreitung des vorgegebenen Mindestwerts wird das Freigabesignal beendet, wobei es sinnvoll ist, zwischen dem Erzeugungskriterium und dem Beendigungskriterium eine gewisse Hysterese vorzusehen, um ein allzu häufiges Hin- und Herschalten zu vermeiden.

Die Druckmittel-Versorgungseinrichtung (1) überträgt das Freigabesignal über den Datenkommunikations-Kanal (16), über den es von den übrigen Einrichtungen (11, 12, 13, 14, 15, 22), insbesondere von den Druckmittel-Verbrauchseinrichtungen (14, 15), empfangen und ausgewertet werden kann. Sobald das Drucksignal den vorgegebenen Mindestwert nicht mehr erreicht, beendet die Druckmittel-Versorgungseinrichtung (1) die Übertragung des Freigabesignals. In einer vorteilhaften Ausgestaltung der Erfindung wird das Freigabesignal in regelmäßigen Zeitabständen über den Datenkommunikations-Kanal (16) übertragen, z. B. in Abständen von 0,1 s.

Das Freigabesignal kann statt von der Druckmittel-Versorgungseinrichtung (1) auch von einer der anderen Einrichtungen (11, 12, 13, 14, 15, 22), die die von der Druckmittel-Versorgungseinrichtung (1) übertragenen Drucksignale über den Datenkommunikations-Kanal (16) empfangen, gemäß den zuvor erläuterten Schritten erzeugt und über den Datenkommunikations-Kanal (16) übertragen werden, z. B. von einer Zentral-Elektronik oder einer Instrumententafel-Elektronik.

Es ist auch vorteilhaft, die Drucksensoren (5, 6, 7) über die elektrischen Leitungen statt mit der Druckmittel-Versorgungseinrichtung (1) mit einer anderen Einrichtung (22) in dem Fahrzeug zu verbinden, etwa einer Instrumententafel-Elektronik oder einer Zentral-Elektronik. In druckluftgebremsten Kraftfahrzeugen ist es üblich, in der Instrumententafel Anzeigeinstrumente zur Anzeige des in den Druckmittel-Vorratsbehältern (8, 9, 10) vorhandenen Drucks vorzusehen, über die der Führer des Kraftfahrzeuges über die aktuellen Druckwerte informiert wird. Hierfür ist die Instrumententafel bzw. die Instrumententafel-Elektronik (22), die zur Steuerung von Anzeigefunktionen der Instrumententafel dient, mit den Drucksensoren verbunden ist. In einer vorteilhaften Ausgestaltung der Erfindung ist die Instrumententafel-Elektronik (22) derart beschaffen, dass sie ebenfalls an den Datenkommunikations-Kanal (16) angeschlossen ist und die Drucksignale der Drucksensoren (5, 6, 7) über den Datenkommunikations-Kanal (16) an die Druckmittel-Versorgungseinrichtung (1) und ggf. weitere Empfänger überträgt. In einer vorteilhaften Ausgestaltung der Erfindung erzeugt die Instrumententafel-Elektronik (22) statt der Druckmittel-Versorgungseinrichtung (1) das Freigabesignal und übertragt es über den Datenkommunikations-Kanal (16).

Wie schon erwähnt, können die druckmittelverbrauchenden Einrichtungen (11, 12, 13) jederzeit, also auch ohne vorhandenes Freigabesignal, Druckmittel aus dem ihnen zugeordneten Druckmittel-Vorratsbehälter (8, 9, 10) entnehmen. Dagegen ist es den Druckmittel-Verbrauchseinrichtungen (14, 15) nur dann erlaubt, Druckmittel aus einem Druckmittel-Vorratsbehälter (8, 9, 10) zu entnehmen, wenn das Freigabesignal dies erlaubt. Die Druckmittel-Verbrauchseinrichtungen (14, 15) sind daher zum Empfang und zur Auswertung des Freigabesignals ausgestaltet, derart dass sie Druckmittelentnahme nach Maßgabe des Freigabesignals durchführen. Die übrigen, auch ohne Druckmittelentnahme durchführbaren Funktionen der Druckmittel-Verbrauchseinrichtungen (14, 15) werden dabei unabhängig von dem Freigabesignal durchgeführt.

Die druckmittelverbrauchende Einrichtung (11) ist des weiteren über eine elektrische Leitung mit einem Geschwindigkeitssensor (17) verbunden. Aus dem Signal des Geschwindigkeitssensors ist die Fahrgeschwindigkeit des Fahrzeugs bestimmbar. Die druckmittelverbrauchende Einrichtung (11) empfängt das Signal des Geschwindigkeitssensors (17) und gibt ein die Fahrzeuggeschwindigkeit angebendes Geschwindigkeitssignal auf dem Datenkommunikations-Kanal (16) aus.

In einer vorteilhaften Ausgestaltung der Erfindung wird das Freigabesignal auch dann erzeugt, wenn das Geschwindigkeitssignal unterhalb eines vorbestimmten Geschwindigkeitswerts liegt, z. B. in der Nähe des Fahrzeugstillstands. Hierdurch ist es den Druckmittel-Verbrauchseinrichtungen (14, 15) möglich, bei Bedarf auch dann Druckmittel aus den Druckmittel-Vorratsbehältern (8, 9, 10) zu entnehmen, wenn das oben erwähnte Mindestdruck-Kriterium zur Erzeugung des Freigabesignals nicht erfüllt ist, d. h. wenn der vorbestimmte Mindestdruckwert unterschritten ist.

Entweder die druckmittelverbrauchende Einrichtung (11) oder eine der Einrichtungen (1, 12, 13, 14, 15, 22), die das Geschwindigkeitssignal von dem Datenkommunikations-Kanal (16) empfangen können, können das Freigabesignals aufgrund des soeben erläuterten Geschwindigkeits-Kriteriums erzeugen. Vorteilhafterweise erfolgt die Erzeugung des Freigabesignals einheitlich in einer der Einrichtungen (1, 11, 12, 13, 14, 15, 22), die somit sowohl das Mindestdruck-Kriterium als auch das Geschwindigkeits-Kriterium prüft und Freigabesignal erzeugt, wenn wenigstens eines der Kriterien erfüllt ist.

In einer vorteilhaften Ausgestaltung der Erfindung wird das Freigabesignal auch dann erzeugt, wenn eine Feststellbremse betätigt ist, z.B. durch den Fahrer des Fahrzeuges. In einem solchen Fall ist davon auszugehen, dass sich das Fahrzeug im wesentlichen im Stillstand befindet. Zudem kann der Fahrer durch Lösen der Feststellbrems-Betätigung jederzeit das Aussenden des Freigabesignals aufgrund dieses Kriteriums unterbrechen.

Alternativ kann das Freigabesignal auch sozusagen als invertiertes Signal erzeugt und übertragen werden, d.h. als ein Druckmittelentnahme-Sperrsignal (kurz: Sperrsignal), das signalisiert, dass kein Druckmittel aus einem Druckmittel-Vorratsbehälter (8, 9, 10) entnommen werden darf. Es ist auch vorteilhaft, das Freigabesignal und das Sperrsignal kombiniert zu verwenden, z. B. derart, dass bei Erreichen des vorgegebenen Mindestwerts das Freigabesignal übertragen wird und bei Nicht-Erreichen des vorgegebenen Mindestwerts das Sperrsignal übertragen wird.

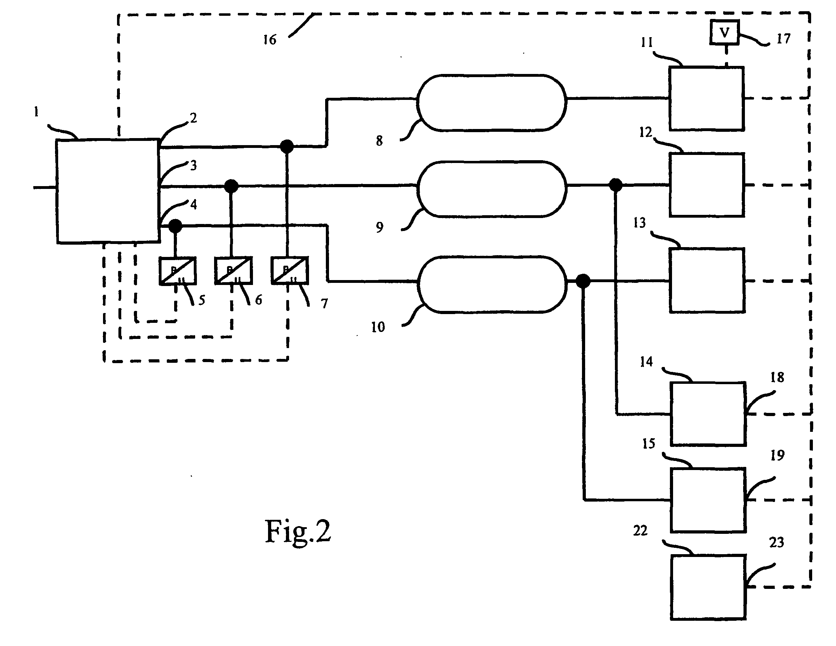

Die Druckmittelanlage gemäß Fig. 2 entspricht derjenigen von Fig. 1, mit dem Unterschied, dass an der Druckmittel-Versorgungseinrichtung (1) nicht die Druckmittelabgabeanschlüsse (20, 21) zum Anschluss der Druckmittel-Verbrauchseinrichtungen (14, 15) vorgesehen sind. Stattdessen ist die Druckmittel-Verbrauchseinrichtung (14) über eine Druckmittelleitung direkt an den Druckmittel-Vorratsbehälter (9) angeschlossen, und die Druckmittel-Verbrauchseinrichtung (15) ist über eine weitere Druckmittelleitung direkt an den Druckmittel-Vorratsbehälter (10) angeschlossen. Hierdurch kann die Druckmittel-Versorgungseinrichtung (1) weiter vereinfacht und kostengünstiger gestaltet werden.

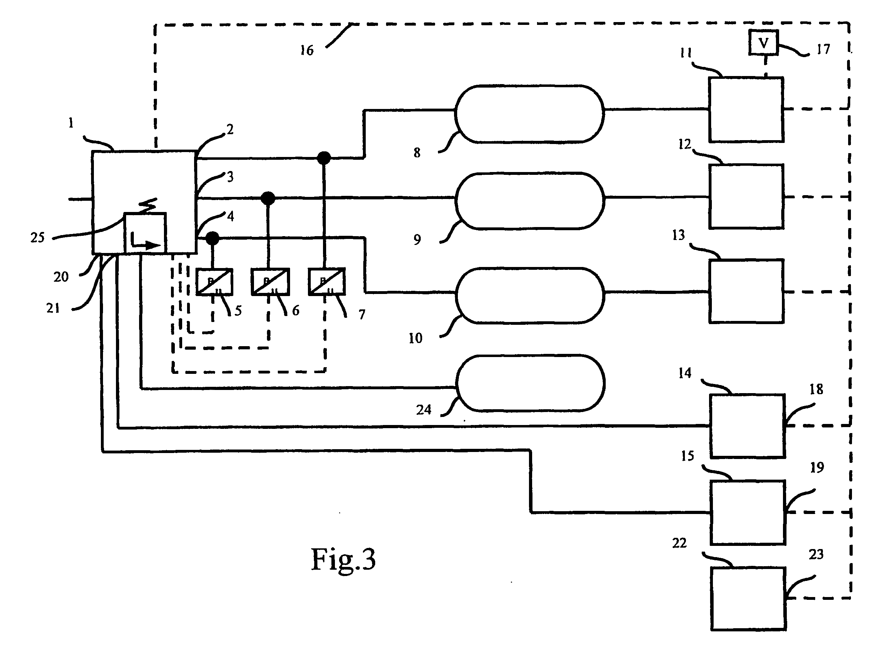

Die Druckmittelanlage gemäß Fig. 3 geht ebenfalls von der Druckmittelanlage gemäß Fig. 1 aus, wobei die Ausführungsform gemäß Fig. 3 für solche Fahrzeuge vorteilhaft ist, bei denen eine Druckmittel-Verbrauchseinrichtung (14, 15) einen relativ häufigen und hohen Druckmittelbedarf hat, wie z. B. eine Niveauregelungsanlage in einem Fahrzeug, bei dem aufgrund seiner Einsatzart häufig manuell die Niveaulage verstellt werden muss. In solchen Fällen ist es vorteilhaft, den infolge der Erfindung aus Sicherheitsgründen an sich nicht mehr erforderlichen Druckmittel-Vorratsbehälter allein aufgrund des erhöhten Druckmittelbedarfs dennoch vorzusehen. Dieser ist in der Fig. 3 als Druckmittel-Vorratsbehälter (24) dargestellt.

Der Druckmittel-Vorratsbehälter (24) ist über ein Überströmventil (25) mit dem in der Druckmittel-Versorgungseinrichtung (1) vorgesehenen Kompressor verbunden. Gemäß einer vorteilhaften Weiterbildung der Erfindung ist das Überströmventil (25) in die Druckmittel-Versorgungseinrichtung (1) integriert. Hierdurch kann das Überströmventil (25) relativ kostengünstig realisiert werden. Ein weiterer Vorteil ist, dass kein zusätzlicher Aufwand an Druckmittelleitungen für den Anschluss des Überströmventils (25) erforderlich ist. Das Überströmventil (25) hat die Funktion, von dem Kompressor erzeugte Druckluft erst bei Erreichen eines gewissen Mindestdrucks in den Druckmittel-Vorratsbehälter (24) durchzulassen. Der Mindestdruck wird vorteilhaft entsprechend dem sogenannten Berechnungsdruck oder gemäß gesetzlicher Anforderungen festgelegt. Hierbei handelt es sich um einen Druckwert, bei dem dem Fahrer des Fahrzeuges die Betriebsbereitschaft der Betriebsbremsanlage optisch oder akustisch signalisiert wird. Die Druckmittel-Verbrauchseinrichtung (14, 15) kann, sobald in dem Druckmittel-Vorratsbehälter (24) ein entsprechender Druck aufgebaut ist, über ein das Überströmventil (25) überbrückendes Rückschlagventil Druckluft aus dem Druckmittel-Vorratsbehälter (24) entnehmen.

## Patentansprüche

1. Druckmittelanlage mit einer Druckmittel-Versorgungseinrichtung (1), wenigstens einem Druckmittel-Vorratsbehälter (8, 9, 10) sowie mit wenigstens einer Druckmittel-Verbrauchseinrichtung (14, 15), wobei die Druckmittel-Versorgungseinrichtung (1) wenigstens den Druckmittel-Vorratsbehälter (8, 9, 10) mit Druckmittel versorgt und die Druckmittel-Verbrauchseinrichtung (14, 15) zur Entnahme von Druckmittel aus dem Druckmittel-Vorratsbehälter (8, 9, 10) geeignet ist, **dadurch gekennzeichnet, dass** ein Datenkommunikations-Kanal (16) vorgesehen ist, an den wenigstens die Druckmittel-Versorgungseinrichtung (1) sowie die Druckmittel-Verbrauchseinrichtung (14, 15) angeschlossen ist, wobei auf dem Datenkommunikations-Kanal (16) von zumindest einer der daran angeschlossenen Einrichtungen (1, 11, 12, 13, 14, 22) ein Druckmittelentnahme-Freigabesignal übertragen wird, welches einer Druckmittel-Verbrauchseinrichtung (14, 15) signalisiert, dass Druckmittel aus wenigstens einem Druckmittel-Vorratsbehälter (8, 9, 10) entnommen werden darf.

2. Druckmittelanlage nach Anspruch 1, **dadurch gekennzeichnet, dass** das Druckmittelentnahme-Freigabesignal von der Druckmittel-Versorgungseinrichtung (1) erzeugt und über den Datenkommunikations-Kanal (16) übertragen wird.

3. Druckmittelanlage nach Anspruch 1, **dadurch gekennzeichnet, dass** dem Druckmittel-Vorratsbehälter (8, 9, 10) eine druckmittelverbrauchende Einrichtung (11, 12, 13) zugeordnet ist, welche auch ohne Freigabesignal Druckmittel aus dem zugeordneten Druckmittel-Vorratsbehälter (8, 9, 10) entnehmen darf.

4. Druckmittelanlage nach Anspruch 3, **dadurch gekennzeichnet, dass** die druckmittelverbrauchende Einrichtung (11, 12, 13) an den Datenkommunikations-Kanal (16) angeschlossen ist, und dass die druckmittelverbrauchende Einrichtung (11, 12, 13) das Druckmittelentnahme-Freigabesignal erzeugt und über den Datenkommunikations-Kanal (16) überträgt.

5. Druckmittelanlage nach Anspruch 3 oder 4, **dadurch gekennzeichnet, dass** die druckmittelverbrauchende Einrichtung (11, 12, 13) als wenigstens ein Teil einer Bremsanlage eines Fahrzeuges, insbesondere einer Betriebsbremsanlage, ausgebildet ist.

6. Druckmittelanlage nach Anspruch 1, **dadurch gekennzeichnet, dass** das Druckmittelentnahme-Freigabesignal von einer weiteren an den Datenkommunikations-Kanal (16) angeschlossenen Einrichtung (22) erzeugt und über den Datenkommunikations-Kanal (16) übertragen wird.

7. Druckmittelanlage nach wenigstens einem der vorhergehenden Ansprüche, **dadurch gekennzeichnet, dass** das Druckmittelentnahme-Freigabesignal erzeugt wird, wenn der Druck in dem Druckmittel-Vorratsbehälter (8, 9, 10) einen vorgegebenen Mindestwert erreicht.

8. Druckmittelanlage nach wenigstens einem der vorhergehenden Ansprüche, **dadurch gekennzeichnet, dass** das Druckmittelentnahme-Freigabesignal erzeugt wird, wenn ein die Fahrzeuggeschwindigkeit anzeigendes Geschwindigkeitssignal eines Fahrzeugs in dem die Druckmittelanlage angeordnet ist, unterhalb eines vorbestimmten Geschwindigkeitswerts liegt.

9. Druckmittelanlage nach wenigstens einem der vorhergehenden Ansprüche, **dadurch gekennzeichnet, dass** das Druckmittelentnahme-Freigabesignal erzeugt wird, wenn eine Feststellbremse eines Fahrzeugs in dem die Druckmittelanlage angeordnet ist, betätigt ist.

10. Druckmittelanlage nach wenigstens einem der vorhergehenden Ansprüche, **dadurch gekennzeichnet, dass** ein zum Anschluss eines Druckmittel-Vorratsbehälters (24) vorgesehenes Überströmventil (25) in die Druckmittel-Versorgungseinrichtung (1) integriert ist.

11. Druckmittel-verbrauchseinrichtung (14,15) einer Druckmittelanlage nach wenigstens einem der vorhergehenden Ansprüche, die nur dann Druckmittel aus dem Druckmittel-Vorratsbehälter (8, 9, 10) entnimmt, wenn das Freigabesignal dies erlaubt.

12. Druckmittel-verbrauchseinrichtung (14,15) nach Anspruch 11, wobei diese als Niveauregelungsanlage für ein Kraftfahrzeug ausgebildet ist.

## Claims

1. Pressure medium system with a pressure-medium supply device (1), with at least one pressure-medium reservoir (8, 9, 10) and with at least one pressure-medium consumption device (14, 15), the pressure-medium supply device (1) supplying at least the pressure-medium reservoir (8, 9, 10) with pressure medium, and the pressure-medium consumption device (14, 15) being suitable for the extraction of pressure medium from the pressure-medium reservoir (8, 9, 10), **characterized in that** a data communication channel (16) is provided, to which at least the pressure-medium supply device (1) and the pressure-medium consumption device (14, 15) are connected, at least one of the devices (1, 11, 12, 13, 14, 22) connected to the data communication channel (16) transmitting along the latter a pressure-medium extraction enabling signal which signals to a pressure-medium consumption device (14, 15) that pressure medium should be extracted from at least one pressure-medium reservoir (8, 9, 10).

2. Pressure medium system according to Claim 1, **characterized in that** the pressure-medium extraction enabling signal is generated by the pressure-medium supply device (1) and is transmitted via the data communication channel (16).

3. Pressure medium system according to Claim 1, **characterized in that** the pressure-medium reservoir (8, 9, 10) is assigned a pressure medium-consuming device (11, 12, 13) which is allowed to extract pressure medium from the assigned pressure-medium reservoir (8, 9, 10) even without an enabling signal.

4. Pressure medium system according to Claim 3, **characterized in that** the pressure medium-consuming device (11, 12, 13) is connected to the data communication channel (16), and **in that** the pressure medium-consuming device (11, 12, 13) generates the pressure-medium extraction enabling signal and transmits it via the data communication channel (16).

5. Pressure medium system according to Claim 3 or 4, **characterized in that** the pressure medium-consuming device (11, 12, 13) is designed as at least one part of a brake system of a vehicle, in particular of a service brake system.

6. Pressure medium system according to Claim 1, **characterized in that** the pressure-medium extraction enabling signal is generated by a further device (22) connected to the data communication channel (16) and is transmitted via the data communication channel (16).

7. Pressure medium system according to at least one of the preceding claims, **characterized in that** the pressure-medium extraction enabling signal is generated when the pressure in the pressure-medium reservoir (8, 9, 10) reaches a predetermined minimum value.

8. Pressure medium system according to at least one of the preceding claims, **characterized in that** the pressure-medium extraction enabling signal is generated when a speed signal, indicating the vehicle speed of a vehicle in which the pressure medium system is arranged lies below a predetermined speed value.

9. Pressure medium system according to at least one of the preceding claims, **characterized in that** the pressure-medium extraction enabling signal is generated when a parking brake of a vehicle in which the pressure medium system is arranged is actuated.

10. Pressure medium system according to at least one of the preceding claims, **characterized in that** an overflow valve (25) provided for the connection of a pressure-medium reservoir (24) is integrated into the pressure-medium supply device (1).

11. Pressure-medium consumption device (14, 15) of a pressure medium system according to at least one of the preceding claims, which extracts pressure medium from the pressure-medium reservoir (8, 9, 10) only when the enabling signal allows this.

12. Pressure-medium consumption device (14, 15) according to Claim 11, this being designed as a levelling system for a motor vehicle.

## Revendications

1. Installation à agent de pression comprenant un dispositif d'alimentation en agent de pression (1), au moins un réservoir d'agent de pression (8, 9, 10) ainsi qu'au moins un dispositif consommateur d'agent de pression (14, 15), le dispositif d'alimentation en agent de pression (1) alimentant au moins le réservoir d'agent de pression (8, 9, 10) en agent de pression et le dispositif consommateur d'agent de pression (14, 15) étant approprié pour prélever de l'agent de pression du réservoir d'agent de pression (8, 9, 10), **caractérisée en ce qu'**un canal de communication de données (16) est prévu, auquel est raccordé au moins le dispositif d'alimentation en agent de pression (1) ainsi que le dispositif consommateur d'agent de pression (14, 15), un signal de libération de prélèvement d'agent de pression étant transmis au canal de communication de données (16) d'au moins l'un des dispositifs raccordés à celui-ci (1, 11, 12, 13, 14, 22), ce signal signalant à un dispositif consommateur d'agent de pression (14, 15) que de l'agent de pression doit être prélevé d'au moins un réservoir d'agent de pression (8, 9, 10).

2. Installation à agent de pression selon la revendication 1, **caractérisée en ce que** le signal de libération de prélèvement d'agent de pression est produit par le dispositif d'alimentation en agent de pression (1) et est transmis par le biais du canal de communication de données (16).

3. Installation à agent de pression selon la revendication 1, **caractérisée en ce que** l'on associe au réservoir d'agent de pression (8, 9, 10) un dispositif consommateur d'agent de pression (11, 12, 13) qui peut prélever de l'agent de pression du réservoir d'agent de pression associé (8, 9, 10) même sans signal de libération.

4. Installation à agent de pression selon la revendication 3, **caractérisée en ce que** le dispositif consommateur d'agent de pression (11, 12, 13) est raccordé au canal de communication de données (16), et **en ce que** le dispositif consommateur d'agent de pression (11, 12, 13) produit le signal de libération de prélèvement d'agent de pression et le transmet par le biais du canal de communication de données (16).

5. Installation à agent de pression selon la revendication 3 ou 4, **caractérisée en ce que** le dispositif consommateur d'agent de pression (11, 12, 13) est réalisé sous forme d'au moins une partie d'une installation de frein d'un véhicule, en particulier d'une installation de frein de service.

6. Installation à agent de pression selon la revendication 1, **caractérisée en ce que** le signal de libération de prélèvement d'agent de pression est produit par un autre dispositif (22) raccordé au canal de communication de données (16) et est transmis par le biais du canal de communication de données (16).

7. Installation à agent de pression selon au moins l'une quelconque des revendications précédentes, **caractérisée en ce que** le signal de libération de prélèvement d'agent de pression est produit lorsque la pression dans le réservoir d'agent de pression (8, 9, 10) atteint une valeur minimale prédéterminée.

8. Installation à agent de pression selon au moins l'une quelconque des revendications précédentes, **caractérisée en ce que** le signal de libération de prélèvement d'agent de pression est produit lorsqu'un signal de vitesse d'un véhicule indiquant la vitesse du véhicule dans lequel se trouve l'installation à agent de pression, se situe en dessous d'une valeur de vitesse prédéterminée.

9. Installation à agent de pression selon au moins l'une quelconque des revendications précédentes, **caractérisée en ce que** le signal de libération de prélèvement d'agent de pression est produit lorsqu'un frein de stationnement d'un véhicule dans lequel se trouve l'installation à agent de pression, est activé.

10. Installation à agent de pression selon au moins l'une quelconque des revendications précédentes, **caractérisée en ce qu'**une soupape de débordement (25) prévue pour le raccordement d'un réservoir d'agent de pression (24) est intégrée dans le dispositif d'alimentation en agent de pression (1).

11. Dispositif consommateur d'agent de pression (14, 15) d'une installation à agent de pression selon au moins l'une quelconque des revendications précédentes, qui ne prélève de l'agent de pression du réservoir d'agent de pression (8, 9, 10) que lorsque le signal de libération le permet.

12. Dispositif consommateur d'agent de pression (14, 15) selon la revendication 11, dans lequel celui-ci est réalisé sous forme d'installation de régulation de niveau pour un véhicule automobile.
